# EUROPÄISCHE PATENTSCHRIFT

(11) **EP 0 793 551 B1**
(45) Veröffentlichungstag und Bekanntmachung des Hinweises auf die Patenterteilung: **08.12.1999**
(21) Anmeldenummer: 96932510.9
(22) Anmeldetag: 12.09.1996
(51) Int. Cl.: B21D 28/00

(54) **MASCHINE ZUM STANZEN, BIEGEN UND MONTIEREN VON BLECHTEILEN**
MACHINE FOR STAMPING, BENDING AND ASSEMBLING SHEET METAL PARTS
MACHINE A DECOUPER, PLIER ET ASSEMBLER DES PARTIES DE TOLES

(30) Priorität: 27.09.1995 DE 19535949
(43) Veröffentlichungstag der Anmeldung: 10.09.1997
(73) Patentinhaber: Krauss-Maffei Aktiengesellschaft, 80997 München (DE)
(72) Erfinder: GARTH, Harald, D-87509 Immenstadt (DE)
(74) Vertreter: Rucker, Bernd, Dipl.-Ing.
(86) Internationale Anmeldenummer: EP9604007
(87) Internationale Veröffentlichungsnummer: WO9711801

(56) Entgegenhaltungen:
- EP-A- 0 103 885
- DE-A- 2 618 846
- US-A- 4 696 178
- US-A- 5 271 261

## Beschreibung

Die Erfindung betrifft eine Maschine zum Stanzen, Biegen und Montieren von Blechteilen gemäß Oberbegriff vom Patentanspruch 1.

Eine derartige Maschine ist aus der EP-B-0103885 bekannt. Das Getriebegehäuse ist dem Maschinengehäuse zugeordnet und die Steckkupplung befindet sich zwischen dem Antriebszahnrad des Getriebegehäuses und der Antriebswelle des Schlittenaggregates. Das Schlittenaggregat ist am Maschinengehäuse längsverschiebbar gelagert und kann in beliebigen Verschiebepositionen festgeschraubt werden. Das Getriebegehäuse weist im Inneren des Maschinengehäuses ebenfalls eine Längsschiebeführung auf und muß in der gewünschten Schiebestellung separat befestigt werden. Die Antriebswelle ist im Maschinengehäuse gelagert und ist mit Ausnahme ihrer Enden als Schneckenwelle ausgebildet. Das Antriebszahnrad im Getriebegehäuse ist somit ein Schneckenrad. Die Lageranordnung der drehende Bauteile ist aufwendig, erfordert eine hochpräzise Ausrichtung und ein aufwendiges Schmiersystem, da die Antriebswelle im Maschinengehäuse, das Antriebszahnrad im Getriebegehäuse und die Antriebswelle im Schlittenaggregat jeweils separat gelagert sind.

Die DE-A-2618846 zeigt eine Stanzbiegemaschine, bei der die Antriebswelle ein zentrales Kegelrad trägt. Das Schlittenaggregat trägt auf seiner Antriebswelle ebenfalls ein Kegelrad, das mit dem zentralen Kegelrad kämmt. Die Antriebskupplung zwischen dem Schlittenaggregat und dem Maschinenantrieb erfolgt hier zwischen den beiden Kegelrädern. Die Schlittenaggregate können bei dieser Maschine nur in radialer Richtung zum zentralen Antriebskegelrad angeordnet werden. Die Zahl der Schlittenaggregate und die Universalität der Maschine sind daher begrenzt.

Aufgabe der Erfindung ist es, die Maschine der eingangs genannten Art insbesondere hinsichtlich der Lagerung und der Schmierung der drehenden Teile einfacher auszubilden und die Herstellungskosten der Maschine zu senken.

Diese Aufgabe wird mit den Merkmalen des Patentanspruches 1 gelöst.

Das Getriebegehäuse lagert das Antriebszahnrad und die mit dem Abtriebszahnrad bestückte Abtriebswelle. Das Getriebegehäuse läßt sich kapseln und hat eine Dauerschmierung, die eine Zentralschmierung der Maschine überflüssig macht. Das Antriebszahnrad sitzt auf einer Hohlnabe, die von der Antriebswelle durchsetzt wird. Getriebegehäuse dieser Art werden in Serie kostengünstig hergestellt. Die Antriebswelle besteht aus einer einfachen, auf Länge geschnittenen Polygonprofilstange, wobei es auf genaue Toleranzen in der komplementär ausgebildeten Hohlnabe des Antriebsrades nicht ankommt, weil bei solchen Polygonkupplungen eine Selbstzentrierung stattfindet.

Bei der erfindungsgemäßen Maschine werden die Grundplatten der Schlittenaggregate in die Längsführungen des Maschinengehäuses eingesetzt und in der gewünschten Schiebeposition festgeschraubt. Die rückseitig an der Grundplatte angeschraubten Getriebegehäuse liegen dann mit ihren Hohlnaben in Längsausrichtung, sodaß die, die Antriebswelle bildende Polygonstange lediglich von einer Stirnseite des Maschinengehäuses her eingeschoben werden kann, um die Schlittenaggregate antriebsmäßig zu kuppeln. Die Antriebswelle selbst benötigt keine eigene Lagerung, da sie durch die Winkelgetriebe der Schlittenaggregate abgestützt wird.

Eine Weiterbildung der Erfindung besteht darin, daß die Antriebswelle benachbart ihres mindestens einen Kupplungsabschnittes einen Leerlaufabschnitt aufweist und relativ zum Schlittenaggregat axial soweit verschiebbar ist, daß der Leerlaufabschnitt den Kupplungsabschnitt ersetzt, wobei die größte radiale Erstreckung des Leerlaufabschnittes kleiner als die kleinste radiale Erstreckung des Kupplungsabschnittes im Antriebszahnrad ist. Dieser Kupplungsabschnitt ist vorzugsweise in einem Teilbereich einer über die ganze Länge des Getriebegehäuses reichenden und an ihren Enden gelagerten Hohlnabe ausgebildet und zwar im Bereich des Antriebszahnrades selbst, das nahe einem Ende der Hohlnabe auf dieser befestigt ist. Mit dieser Ausgestaltung läßt sich erreichen, daß entweder das Schlittenaggregat oder die Antriebswelle oder beide Bauteile verschoben werden, um den Kupplungseingriff zu aktivieren oder zu deaktiviern. Es ist also möglich, in einer Reihe Schlittenaggregate einzelne Aggregate auszukuppeln, was durch Verschieben der Antriebswelle besonders einfach ist und mit einem endseitigen Stellantrieb auch automatisiert werden kann.

Das Maschinengehäuse besteht vorzugsweise aus zwei im Abstand parallel angeordneten Horizontalträgern und zwei diese miteinander verbindenden Vertikalträgern. Die Träger haben über ihre ganze Länge denselben Querschnitt und könnten als Strangpressprofile doppel-T-förmig ausgebildet sein und weisen Längskammern auf, die in vergleichsweise breiten Längsschlitzen an gegenüberliegenden Seiten münden. Die Breite der Längsschlitze ist gleich der in der Breitenrichtung gemessenen Dimension der Getriebegehäuse, weil diese durch diese Längsschlitze in die Längskammern der Träger eingefahren werden.

Anhand der Zeichnung wird die Erfindung beispielsweise näher erläutert.

Es zeigt:
- Fig.1: eine teilweise geschnittene Seitenansicht eines Schlittenaggregates mit angebautem Getriebegehäuse,
- Fig.2: eine Vorderansicht des Schlittenaggregates gem. Fig. 1,
- Fig.3: eine Schnittansicht durch das Getriebegehäuse mit Abtriebswelle zum Einbau in ein Schlittenaggregat,
- Fig.4: eine Schnittansicht durch eine erste Ausführungsform eines Maschinengehäuses, das mit einer Schlittenaggregat-Getriebegehäuse-Baueinheit bestückt ist,
- Fig.5: eine Vorderansicht des Maschinengehäuses gemäß Fig.4
- Fig.6: eine Vorderansicht einer abgewandelten Ausführungsform einer mit Schlittenaggregaten bestückten Maschine,
- Fig.7: eine Vorderansicht einer weiter abgewandelten Maschine, die zusätzlich mit linken und rechten Schlittenaggregaten bestückt ist,
- Fig. 8: eine Schnittansicht durch die Maschine gem. Figuren 6 und 7,
- Fig. 9: eine horizontale Schnittansicht mehrerer Getriebegehäuse, die durch eine gemeinsame Antriebswelle miteinander verbunden sind, und
- Fig. 10: eine Schnittansicht ähnlich Fig.9, jedoch mit axial verschobener Antriebswelle.

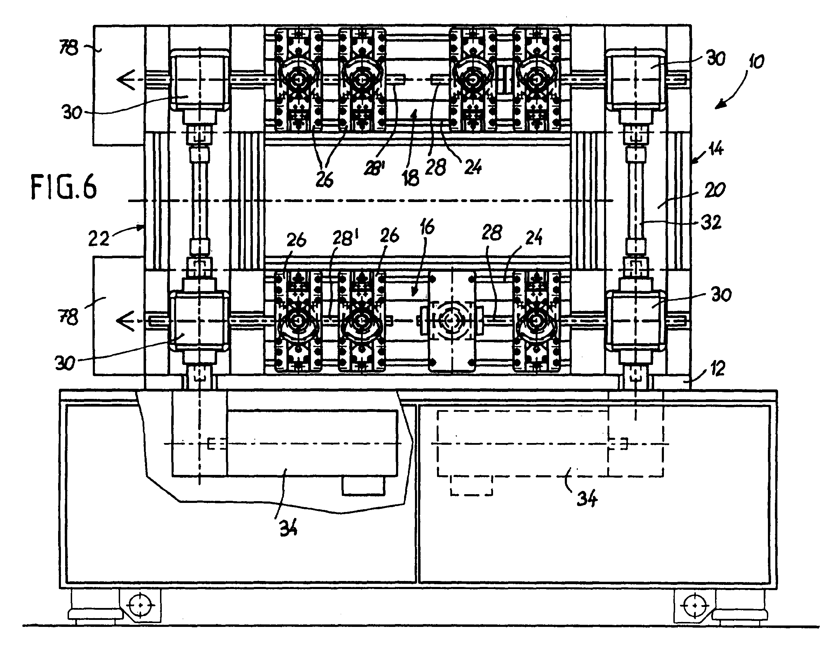

Der Grundaufbau einer Stanz- und Biegemaschiene ergibt sich etwa aus Fig. 6. Die Maschine 10 hat eine gefräste oder geschliffene Montageplatte 12, auf der ein Maschinengehäuse 14 befestigt ist. Dieses besteht aus einem unteren Horizontalträger 16 und einem identisch ausgebildeten oberen Horizontalträger 18. Beide Horizontalträger 16, 18 sind stirnseitig an gleich ausgebildeten Vertikalträgern 20,22 festgeschraubt. Die Horizontalträger 16, 18 weisen je obere und untere Längsnuten 24 an ihren Vorderseiten auf, in denen Nutensteine verschiebbar sind, mittels deren eine Anzahl Schlittenaggregate 26 an den Trägern 16, 18 festgeschraubt sind. Die Schlittenaggregate 26 werden von horizontalen Antriebswellen 28 angetrieben, die je zu einem Winkelgetriebe 30 führen, das in einem Vertikalträger 20 befestigt ist. Die beiden Winkelgetriebe 30 sind durch eine vertikale Verbindungswelle 32 antriebsmäßig miteinander verbunden. Das untere Winkelgetriebe 30 im Vertikalträger 20 hat eine die Bodenplatte 12 durchsetzende Ausgangswelle, welche mit einem Antriebsmotor 34 antriebsmäßig verbunden ist, der an der Unterseite der Bodenplatte 12 befestigt ist.

Die Maschine 10 gemäß Fig. 6 hat die Besonderheit, daß das Gehäuse 14 in eine linke Hälfte und eine rechte Hälfte derart unterteilt ist, daß jeder der Hälften eigene Antriebswellen 28, 28' zugeordnet sind, die je mit einem Antriebsmotor 34 antriebsmäßig gekuppelt sind. Die Schlittenaggregate 26 der linken Hälfte des Gehäuses können also mit einer anderen Taktzahl betrieben werden als diejenigen der rechten Gehäusehälfte.

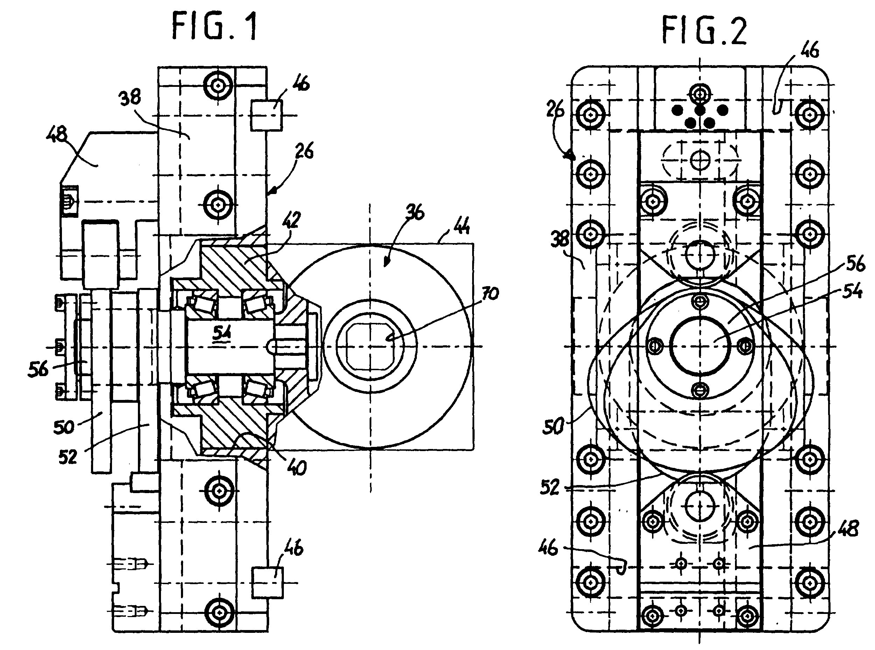

Die Figuren 1 und 2 zeigen nun eine neuartige Baueinheit, die aus einem Schlittenaggregat 26 mit integriertem Winkelgetriebe 36 besteht. Das Schlittenaggregat 26 hat eine Grundplatte 38 mit einer von der Rückseite her zugänglichen gestuften Bohrung 40, in die ein komplementärer Bund 42 eines Getriebegehäuses 44 des Winkelgetriebes 36 formschlüssig eingreift. Das Getriebegehäuse 44 ist mittels vier Schrauben von der Vorderseite der Grundplatte 38 her an dieser befestigt. Von der Rückseite der Grundplatte 38 springen obere und untere Schienen 46 vor, die über die Breite der Grundplatte 38 reichen und formschlüssig in die Nuten 24 der beiden Horizontalträger 16, 18 des Maschinengehäuses 14 eingreifen.

An der Vorderseite der Grundplatte 38 befindet sich ein Schiffen 48, der in bekannter Weise mittels Nockenscheiben 50, 52 angetrieben wird, die mittels eines, auf einer Abtriebswelle 54 des Winkelgetriebes 36 sitzenden Nockenscheibenträgers 56 befestigt sind.

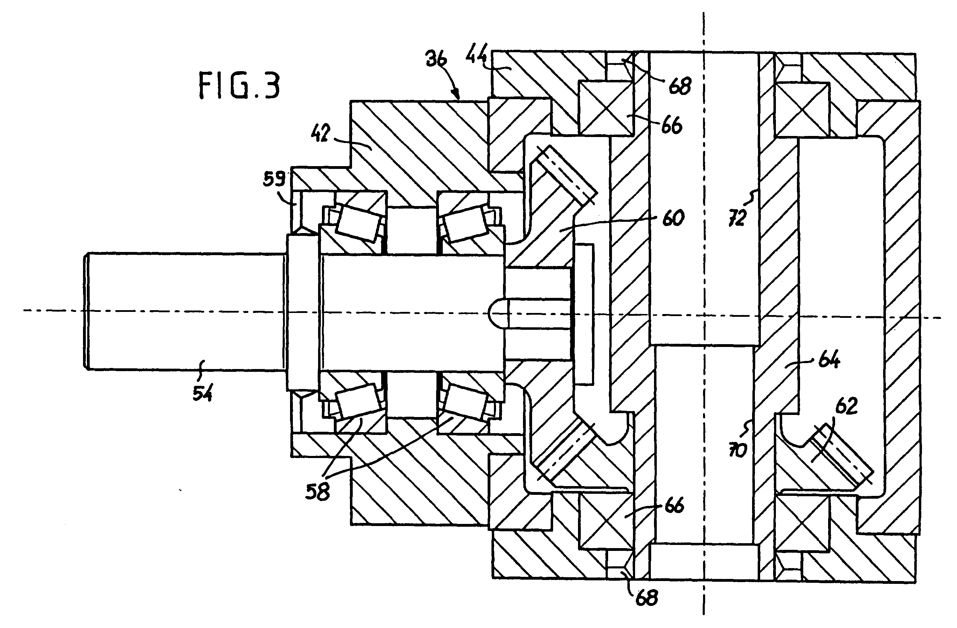

Wie sich am besten aus Fig. 3 ergibt, hat das Getriebegehäuse 44 einen Vorbauansatz, der durch den gestuften Bund 42 gebildet wird und in der eine besonders kräftig ausgebildete Lageranordnung 58 vorgesehen ist, die aus zwei axial beabstandeten Einzellagern besteht und die Abtriebswelle 54 lagert, die innerhalb des Getriebeghäuses 44 ein Abtriebskegelrad 60 trägt. Dieses kämmt mit einem Antriebskegelrad 62, das auf einer Hohlnabe 64 sitzt, deren Achse zu der jenigen der Abtriebswelle 54 rechtwinklig liegt und die sich über die ganze Gehäuselänge erstreckt und in endseitigen Lagern 66 gelagert ist. Die Lager 66 sind mittels Ringdichtungen 68 wirksam abgedichtet, genauso, wie dies bei den Lagern 58 durch die äußere Ringdichtung 59 der Fall ist. Das Getriebegehäuse 44 enthält eine Schmiermittelfüllung die für eine Dauerschmierung sorgt.

Die Hohlnabe 64 weist einen polygonalen Kupplungsabschnitt 70 insbesondere in Form eines gerundeten Viereck-Konkavpolygons auf, der sich in Bereich des Antriebszahnrades 62 befindet und in axialer Richtung beidseitig über dieses vorsteht. An dem Kupplungsahschnitt 70 schließt sich ein im Durchmesser größerer Leerlaufabschnitt 72 an, der angenähert gleichlang oder etwas länger ist als der Kupplungsabschnitt 70. Der Kupplungsabschnitt 70 und der Leerlaufabschnitt 72 bilden einen Durchgangskanal des Getriebegehäuses 44 zum Einstecken der Antriebswelle 28.

Wesentlich ist, daß das Getriebe 36 ein Antriebszahnrad 62 enthält, welches in dem Gehäuse 36 gelagert ist und daß die Abtriebswelle 54 etwa in ihrem Mittelbereich zwischen dem die Nockenscheiben 50, 52 tragenden Endabschnitt und der Achse des Antriebsrades 62 das besonders kräftige Lager 58 aufweist, sodaß die aus Grundplatte 38 des Schlittenaggregates 26 und Getriebegehäuse 36 gebildete Baueinheit alle Getriebeelemente positionsgenau lagert, wobei die Kupplung mit der Antriebswelle 28 eine einfache axiale Steckkupplung ist, bei der keine hohen Präzisionsanforderungen bestehen, insbesondere da eine Polygonkupplung auch bei Relativverdrehung der Kupplungsteile selbstzentrierend wirkt. Die geometrische Achse der Antriebswelle 28 wird also durch die in Reihe liegenden Schlittenaggregate 26 definiert. Die Antriebswelle 28 selbst benötigt daher keine eigenen Lagerungen im Maschinengehäuse und im einfachsten Fall genügt als Antriebswelle ein unbearbeiteter Abschnitt einer Profilstange, die als Meterware käuflich ist. Es versteht sich, daß die in Fig. 6 dargestellten Winkelgetriebe 30 in den Vertikalträgern 20, 22 ebenfalls Hohlnaben 64 mit Durchgangskanälen aufweisen, deren Innenkontur derjenigen des Kupplungsabschnittes 70 im Winkelgetriebe 36 entspricht. Die Antriebswellen 28 können dann stirnseitig eingeschoben und auch voll herausgezogen werden.

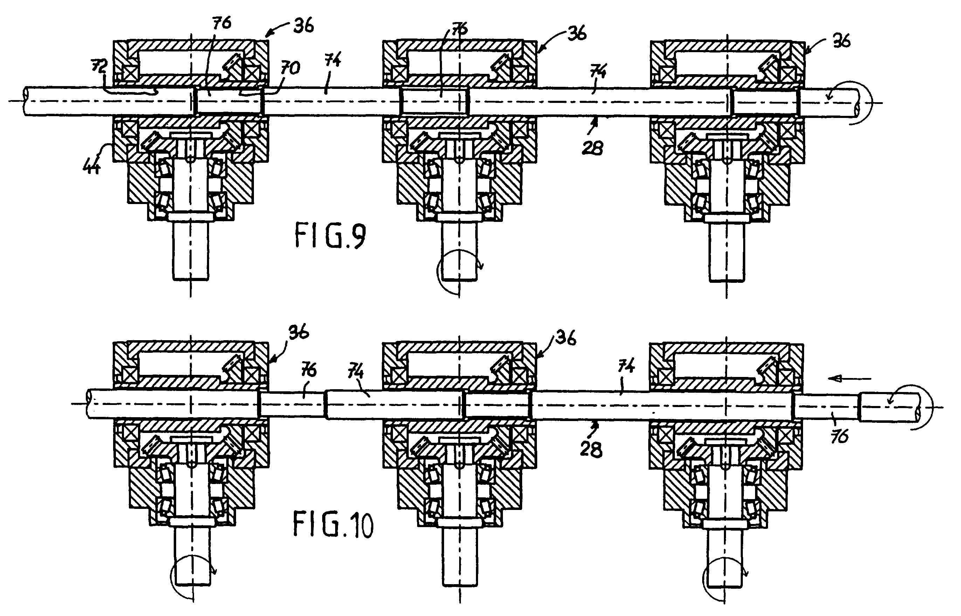

Gemäß der Figuren 9 und 10 hat die Antriebswelle 28 zwischen je zwei polygonalen Antriebsabschnitten 74 einen, auf kleineren Durchmesser abgedrehten Leergangabschnitt 76. Durch Axialverschiebung der Antriebswelle 28 läßt sich sehr einfach erreichen, daß ein Leergangsabschnitt 76 in den Bereich des Kupplungsabschnittes 70 eines Winkelgetriebes 36 gelangt, mit der Folge, daß dieses Getriebe 36 aus dem Antriebszug ausgespart wird. Bei der Ausführung gemäß Fig. 10 bleibt das mittlere Getriebe 36 ohne Antrieb, während die beiden außen liegenden Getriebe angetrieben werden. Verschiebt man die Antriebswelle 28 in Richtung des Pfeils, so werden, wie Fig. 9 veranschaulicht, die beiden außenliegenden Getriebe 36 stillgesetzt. Dafür gelangt das mittlere Getriebe in Funktion. Fig. 6 veranschaulicht, am Maschinengehäuse 14 endseitig angeordnete Verstelleinrichtungen 78, die - sogar mit programmgesteuerter Ansteuerung - die Antriebswellen 28 in Richtung der dort gezeigten Pfeile axial hin und her verschieben. Da auch die Schlittenaggregate 26 in derselben Richtung verschoben werden können ist eine vielseitige Kombination für die Aktivierung und Deaktivierung einzelner Getriebe 36 gegeben.

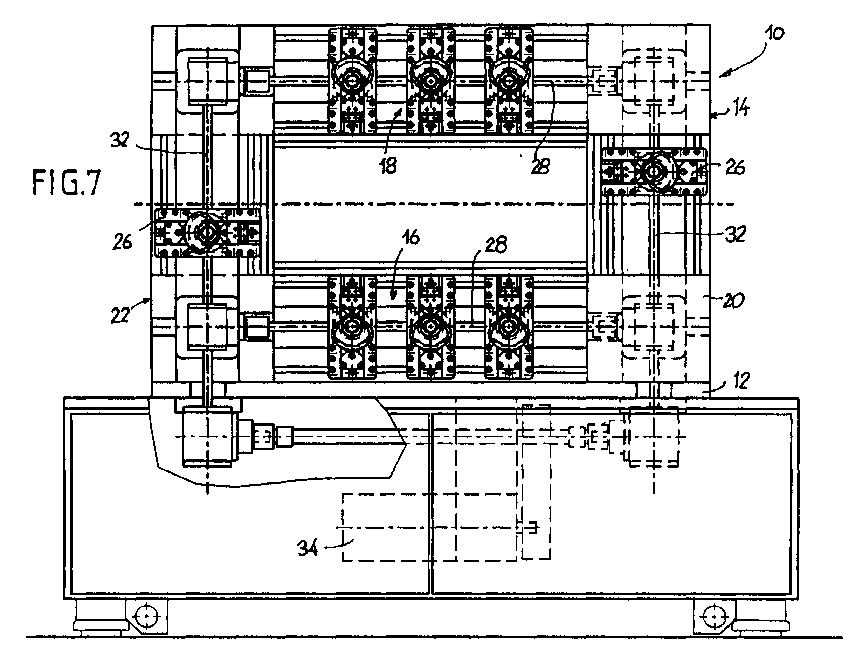

Die Ausführung gemäß Fig. 7 unterscheidet sich von derjenigen gemäß Fig. 6 dadurch, daß die Antriebswellen 28 in den Horizontalträgern 16, 18 durchgängig sind und daß ein einzelner Antriebsmotor 34 eine bodenseitige Hauptantriebswelle unterhalb der Bodenplatte 12 antreibt, welche die vertikalen Verbindungswellen 32 antreiben, die ihrerseits über Winkelgetriebe die horizontalen Antriebswellen 28 drehen. Letztere werden also beidseitig angetrieben. Außerdem weisen bei dieser Ausführungsform auch die Vertikalträger 20, 22 Schlittenaggregate 26 auf, die also von den Verbindungswellen 32 angetrieben werden. Die Arbeitsrichtung dieser Schlittenaggregate 26 ist somit horizontal. Sieht man in den Grundplatten 38 der Schlittenaggregate 26 anstelle der Befestigungsbohrungen Befestigungsschlitze vor, so ist es auch möglich, die Schlittenaggregate 26 spitzwinklig zur Horizontalen oder Vertikalen arbeiten zu lassen.

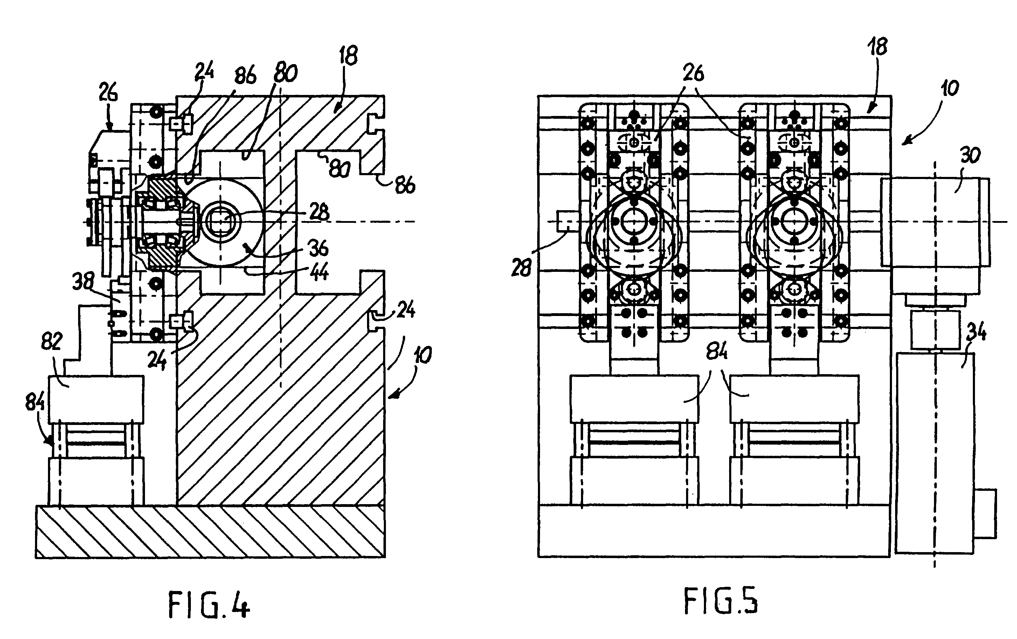

Bei der Ausführung gem. Figuren 4 und 5 besteht das Maschinengehäuse lediglich aus einem Horizontalträger 18 der zwei Längskanäle 80 aufweist, von denen lediglich im linken Kanal 80 Winkelgetriebe 36 der Schlittenaggregate 26 angeordnet sind. Die Schlitten 38 tragen jeweils ein Werkzeug 82 einer Stanzpresse 84. Der Antrieb der Antriebswelle 28 erfolgt - wie vorbeschrieben - über ein Winkelgetriebe 30 vom Antriebsmotor 34, der hier seitlich am Horizontalträger 18 befestigt ist.

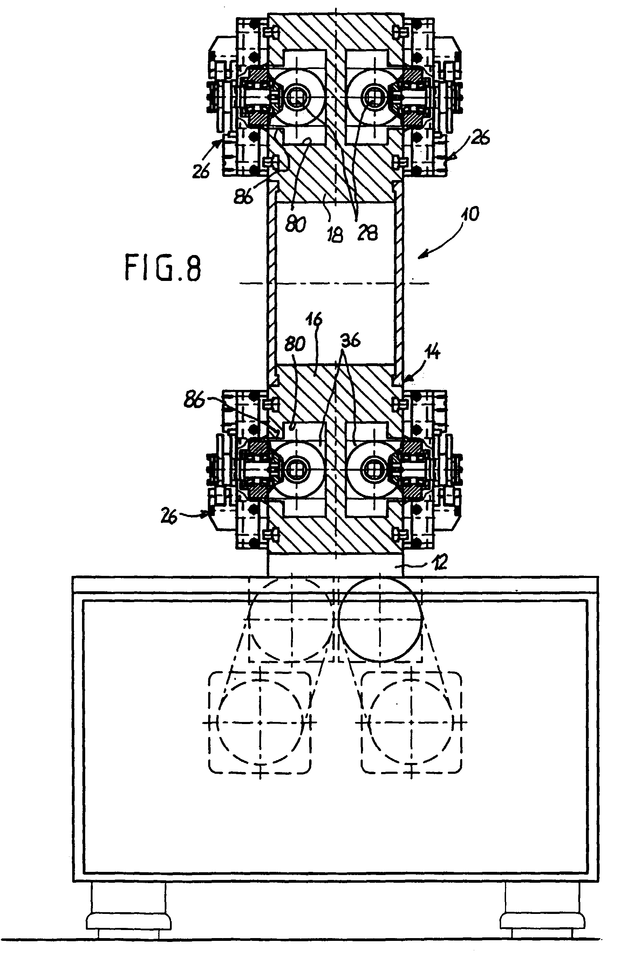

Fig. 8 veranschaulicht eine Maschine 10 im Querschnitt, wobei sowohl der untere Horizontalträger 16 als auch der obere Horizontalträger 18 vorderseitig und hinterseitig je mit einer Reihe Schlittenaggregate 26 bestückt sind. Jeder der beiden Horizontalträger 16, 18 wird somit von zwei auf gleicher Höhe liegenden Antriebswellen 28 durchsetzt, die über endseitige Winkelgetriebe von eigenen bodenseitigen Antriebsmotoren angetrieben werden

In allen Ausführungsformen münden die Längskanäle 80 in Längsschlitzen 86, die über die Länge der Horizontalträger 16, 18 und der Vertikalträger 20, 22 reichen und deren Breite etwas größer als die in dieser Richtung gemessene Dimension des Getriebegehäuse 44 ist.

Die Antriebswelle 28 bzw. deren Antriebsabschnitt 74 ist als etwa quadratisches jedoch an den Seiten und den Ecken gerundetes Polygonprofil dargestellt. Solche Profile sind als sog. P4C-Profile z.B. in Deutschland unter DIN 32712 genormt. Die Erfindung umfaßt aber auch äquivalente Formschlußprofile, wie z.B. Keil-und Vielkeilwellen und Wellen mit Nut und Paßfeder.

## Patentansprüche

1. Maschine zum Stanzen, Biegen und Montieren von Blechteilen, mit einem Gehäuse (14), in dem eine Antriebswelle (28) gelagert ist und an dem mehrere, Werkzeuge tragende Schlittenaggregate (26) befestigbar sind, die je eine, mindestens eine Nockenscheibe (50, 52) sowie ein Abtriebszahnrad (60) tragende Abtriebswelle (54) aufweisen, die mittels eines, in einem Getriebegehäuse (44) angeordneten Winkelgetriebes (36) durch das Abtriebszahnrad (60) mit der Antriebswelle (28) im Antriebseingriff steht, wobei das Schlittenaggregat (26) nach Lösen einer drehbaren Steckkupplung (28, 64) vom Maschinengehäuse (14) abnehmbar ist, **dadurch gekennzeichnet, daß** das Winkelgetriebe (36) ein zweites, im Getriebegehäuse (44) koaxial zur Antriebswelle (28) gelagertes Antriebszahnrad (62) aufweist und das Getriebegehäuse (44) mit der Grundplatte (38) des Schlittenaggregates (26) eine Baueinheit bildet, und daß das zweites Antriebszahnrad (62) und die Antriebswelle (28) komplementäre unrunde Kupplungsabschnitte (70, 74) aufweisen, die zusammen die Steckkupplung (28, 64) bilden.

2. Maschine nach Anspruch 1, **dadurch gekennzeichent, daß** im Maschinengehäuse (14) mindestens zwei Winkelgetriebe (36) befestigt sind, deren Antriebszahnräder (62) die alleinigen Lager der Antriebswelle (28) bilden.

3. Maschine nach Anspruch 1 oder 2, **dadurch gekennzeichnet, daß** an mindestens einem Ende des Maschinengehäuses (14) ein Antriebs-Winkelgetriebe (30) angeordnet ist, das ein erstes Zahnrad (62) mit unrundem Nabendurchgang derselben Form wie ein Nabendurchgang des Antriebszahnrades (62) im Winkelgetriebe (36) des Schlittenaggregates (26) aufweist.

4. Maschine nach einem der Ansprüche 1 bis 3, **dadurch gekennzeichnet, daß** die Antriebswelle (28) benachbart ihres mindestens einem Kupplungsabschnittes (74) einen Leergangabschnitt (76) aufweist und relativ zum Schlittenaggregat (26) axial so weit verschiebbar ist, daß der Leergangabschnitt (76) in die vorherige Position des Kupplungsabschnittes (74) gelangt, wobei die größte radiale Erstreckung des Leergangabschnittes (76) kleiner als die kleinste radiale Erstreckung des Kupplungsabschnittes (70) des Antriebszahnrades (62) ist.

5. Maschine nach Anspruch 4, **dadurch gekennzeichnet, daß** die Antriebswelle (28) in ihren Lagern (64) axial verschiebbar angeordnet ist.

6. Maschine nach einem der Ansprüche 1 bis 5, **dadurch gekennzeichnet**, **daß** die Antriebswelle (28) aus dem Maschinengehäuse (14) axial herausziehbar gelagert ist.

7. Maschine nach Anspruch 5, **dadurch gekennzeichnet, daß** an einem Ende der Antriebswelle (28) ein axialer Verschiebeantrieb (78) angreift.

8. Maschine nach einem der Ansprüche 1 bis 7, **dadurch gekennzeichnet, daß** im Maschinengehäuse (14) mindestens eine Längskammer (80) gebildet ist, in der die Antriebswelle (28) und ein Teil jedes Getriebegehäuses (44) von in Reihe liegenden Schlittenaggregaten (26) angeordnet sind, daß die Kammer (80) durch einen Längsschlitz (86) in einer Wand des Maschinengehäuses (14) zugänglich ist, und daß die Breite des Längsschlitzes (86) mindestens gleich der in dieser Breitenrichtung gemessenen Dimension des Getriebegehäuses (44) ist.

9. Maschine nach einem der Ansprüche 3 bis 8, **dadurch gekennzeichnet, daß** das Maschinengehäuse (14) aus zwei im Abstand parallel angeordneten Horizontalträgern (16, 18) und zwei diese miteinander verbindenden Vertikalträgern (20, 22) besteht, daß in mindestens einern der Vertikalträger (20, 22) ein oberes und ein unteres Antriebs-Winkelgetriebe (30) angeordnet sind, daß beide Antriebs-Winkelgetriebe (30) über jeweils eine Antriebswelle (28) mit dem Winkelgetriebe (36) der Schlittenaggregate (26) an beiden Horizontalrägern (16, 18) antriebsmäßig verbindbar sind, daß beide Antriebs-Winkelgetriebe (30) jeweils ein zweites Zahnrad aufweisen und daß die beiden zweiten Zahnräder durch eine Verbindungswelle (32) miteinander verbunden sind.

10. Maschine nach einem der Ansprüche 1 bis 9, **dadurch gekennzeichnet, daß** der mindestens eine Kupplungsabschnitt (74) der Antriebswelle (28) eine gerunde Mehreck-Polygonkontur aufweist.

## Claims

1. Machine for stamping, bending and assembling sheet metal parts, with a housing (14), in which a drive shaft (28) is mounted, and onto which several slide assemblies (26) bearing tools can be secured, which each have at least one cam disc (50, 52) and a driven shaft (54) bearing a driven gear (60), which by means of an angular gear (36) arranged in a gear housing (44) is in drive engagement via the driven gear (60) with the drive shaft (28), wherein the slide assembly (26) after loosening a rotatable plug coupling (28, 64) can be removed from the machine housing (14), characterised in that the angular gear (36) has a second drive gear (62) mounted in the gear housing (44) coaxial to the drive shaft (28) and the gear housing (44) with the base plate (38) of the slide assembly (26) forms a structural unit and in that the second drive gear (62) and the drive shaft (28) have complementary non-circular coupling sections (70, 74) which together form the plug coupling (28, 64).

2. Machine according to claim 1, characterised in that in the machine housing (14) at least two angular gears (36) are secured the drive gears (62) of which form the only bearings of the drive shaft (28).

3. Machine according to claim 1 or 2, characterised in that on at least one end of the machine housing (14) a drive angular gear (30) is arranged, which has a first gear (62) with non-circular hub passage of the same shape as a hub passage of the drive gear (62) in the angular gear (36) of the slide assembly (26).

4. Machine according to one of claims 1 to 3, characterised in that the drive shaft (28) adjacent to its at least one coupling section (74) has an idling section (76) and can be displaced relative to the slide assembly (26) axially so far that the idling section (76) moves into the previous position of the coupling section (74), wherein the greatest radial extension of the idling section (76) is smaller than the smallest radial extension of the coupling section (70) of the drive gear (62).

5. Machine according to claim 4, characterised in that the drive shaft (28) is arranged axially displaceably in its bearings (64).

6. Machine according to one of claims 1 to 5, characterised in that the drive shaft (28) is mounted to be axially removable from the machine housing (14).

7. Machine according to claim 5, characterised in that at one end of the drive shaft (28) an axial displacement drive (78) engages.

8. Machine according to one of claims 1 to 7, characterised in that in the machine housing (14) at least one longitudinal chamber (80) is formed in which the drive shaft (28) and a part of each gear housing (44) are arranged by slide assemblies (26) in a row, in that the chamber (80) is accessible through a longitudinal slot (86) in a wall of the machine housing (14) and in that the width of the longitudinal slot (86) is at least equal to the width dimension of the gear housing (44).

9. Machine according to one of claims 3 to 8, characterised in that the machine housing (14) comprises two spaced apart parallel horizontal carriers (16, 18) and two vertical carriers (20, 22) connecting the latter, in that in at least of the vertical carriers (20, 22) an upper and a lower drive angular gear (30) are arranged, in that both drive angular gears (30) can be drive connected by a drive shaft (28) with the angular gear (36) of the slide assemblies (26) on both horizontal carriers (16, 18), in that both drive angular gears (30) respectively have a second gear, and in that the two second gears are connected together by a connecting shaft (32).

10. Machine according to one of claims 1 to 9, characterised in that the at least one coupling section (74) of the drive shaft (28) comprises a rounded polygonal contour.

## Revendications

1. Machine à découper, plier et assembler des pièces de tôle, comportant un carter (14) dans lequel est porté un arbre menant (28) et sur lequel peuvent être fixés plusieurs groupes à coulisseau (26) qui portent des outils, qui présentent, chacun, un arbre mené (54) portant au moins une came (50, 52) ainsi qu'un pignon mené (60), qui, au moyen d'un mécanisme d'angle (36) disposé dans un carter de mécanisme (44), vient en prise positive, par l'intermédiaire du pignon mené (60), avec l'arbre menant (28), étant précisé qu'après avoir supprimé un couplage rotatif par enfichage (28, 64) on peut sortir du carter de la machine (14) le groupe à coulisseau (26), caractérisée par le fait que le mécanisme d'angle (36) présente un second pignon menant (62) porté dans le carter de mécanisme (44) coaxialement à l'arbre menant (28) et que le carter de mécanisme (44) forme avec la plaque de base (38) du groupe à coulisseau (26) un ensemble et que le second pignon menant (62) et l'arbre menant (28) présentent des tronçons complémentaires, non ronds, de couplage (70, 74) qui forment ensemble le couplage par enfichage (28, 64).

2. Machine selon la revendication 1, caractérisée par le fait que dans le carter de machine (14) sont fixés au moins deux mécanismes d'angle (36) dont les pignons menants (62) forment les uniques paliers de l'arbre menant (28).

3. Machine selon la revendication 1 ou 2, caractérisée par le fait qu'à au moins une extrémité du carter de machine (14) est disposé un mécanisme d'angle menant (30) qui présente un premier pignon (62) à passage non rond de la même forme qu'un passage du pignon menant (62) du mécanisme d'angle (36) du groupe à coulisseau (26).

4. Machine selon l'une des revendications 1 à 3, caractérisée par le fait que l'arbre menant (28) présente, près de son tronçon de couplage (74), dont il y a au moins un, un tronçon de marche à vide (76) et peut suffisamment coulisser axialement par rapport au groupe à coulisseau (26) pour que le tronçon de marche à vide (76) parvienne dans la position précédente du tronçon de couplage (74), étant précisé que la plus grande extension radiale du tronçon de marche à vide (76) est inférieure à la plus petite extension radiale du tronçon de couplage (70) du pignon menant (62).

5. Machine selon la revendication 4, caractérisée par le fait que l'arbre menant (28) est disposé avec liberté de coulisser axialement dans ses paliers (64).

6. Machine selon l'une des revendications 1 à 5, caractérisée par le fait que l'arbre menant (28) est porté avec possibilité d'être extrait axialement hors du carter de machine (14).

7. Machine selon la revendication 5, caractérisée par le fait qu'à une extrémité de l'arbre menant (28) vient en prise un mécanisme de réglage par coulissement axial (78).

8. Machine selon l'une des revendications 1 à 7, caractérisée par le fait que dans le carter de machine (14) est formée au moins une chambre longitudinale (80) dans laquelle sont disposés l'arbre menant (28) et une partie de chaque carter de mécanisme (44) de groupes à coulisseau (26) placés en rangée, que la chambre (80) est accessible par une fente longitudinale (86) prévue dans une paroi du carter de machine (14),et que la largeur de la fente longitudinale (86) est au moins égale à la dimension du carter de mécanisme (44), mesurée selon cette même direction de la largeur.

9. Machine selon l'une des revendications 3 à 8, caractérisée par le fait que le carter de machine (14) est constitué de deux poutres horizontales (16, 18) disposées parallèlement et à une certaine distance l'une de l'autre et de deux montants verticaux (20, 22) reliant celles-ci entre elles, que dans au moins l'un des montants verticaux (20, 22) sont disposés un mécanisme d'angle menant supérieur et un mécanisme d'angle menant inférieur (30), que les deux mécanismes d'angle menants (30) peuvent être reliés, au point de vue entraînement, par l'intermédiaire chaque fois d'un arbre menant (28), avec le mécanisme d'angle (36) des groupes à coulisseau (26) situé sur les deux poutres horizontales (16, 18), que les deux mécanismes d'angle menants (30) présentent chacun un second pignon et que les deux seconds pignons sont réunis l'un avec l'autre par l'intermédiaire d'un arbre de liaison (32).

10. Machine selon l'une des revendications 1 à 9, caractérisée par le fait que le tronçon de couplage (74), dont il y a au moins un, de l'arbre menant (28) présente un contour polygonal arrondi.
